# EUROPEAN PATENT APPLICATION

(11) **EP 2 604 580 A1**
(43) Date of publication of application: **19.06.2013**
(21) Application number: 11193498.0
(22) Date of filing: 14.12.2011
(51) Int. Cl.: C02F 1/52

(54) **A device and a method for treatment of a medium**

(71) Applicant: Alfa Laval Corporate AB, 221 00 Lund (SE)
(72) Inventor: Madsen, Morten, 2000 Frederiksberg (DK)

(57) **Abstract**

A device for flocculation of a medium, and a method in connection with flocculation of a medium, are provided. The device (10, 40) comprises a container (12) inside which mixing of the medium with a flocculation agent is carried out, an inlet pipe (14) for conveying the medium into the container and an outlet pipe (16) for conveying the flocculated medium out of the container. The device is **characterized in that** a first part (14a) of the inlet pipe (14) extends inside the container, a jet (J) output from the inlet pipe creating a motion of the medium and the flocculation agent that causes the mixing of them.

## Description

### TECHNICAL FIELD

The invention relates to a device for flocculation of a medium and a method in connection with flocculation of a medium. The device comprises a container inside which mixing of the medium with a flocculation agent is carried out, an inlet pipe for conveying the medium into the container and an outlet pipe for conveying the flocculated medium out of the container.

### BACKGROUND ART

In connection with, for example, conventional waste water treatment, sludge is produced. Sludge typically consists of suspended organic and inorganic solids as well as dissolved solids in a large amount of water. To prepare the sludge for further treatment it is normally fed to a dewatering unit for removal of water and concentration of the solids content. To assure an effective dewatering process in the dewatering unit, the sludge is typically treated inside a flocculation device before being fed to the dewatering unit. In the flocculation device the sludge is mixed with a flocculation agent which makes the solids in the sludge agglomerate into larger lumps or flocks which are easier to separate from the water than the individual solid particles.

Flocculation devices comprising a container, an inlet and an outlet connected thereto, and an agitator extending into the container through an upper part thereof, are known. The agitator is connected to, and driven by, a power unit arranged outside the container, typically on top of the same. The sludge is typically fed through the inlet to the container where it is mixed with a flocculation agent during stirring by means of the agitator to enable the forming of flocks. The formation of large, stable flocks is desired and for this to be possible the sludge must be kept inside the container for a sufficiently long time. Further, proper but still gentle mixing of the sludge with the flocculation agent is essential. If the mixing is too aggressive there is a risk of the agitator destroying the flocks formed. If the mixing is too weak, there is a risk of a less efficient flocculation process. Thus, it is essential to control the driving of the agitator very carefully. Further, the driving of the agitator is associated with a relatively large power consumption. Additionally, the arrangement of the power unit driving the agitator outside the container makes the flocculation device somewhat bulky.

### SUMMARY

An object of the present invention is to provide a device for, and a method in connection with, flocculation of a medium that at least partly eliminate potential limitations of prior art. The basic concept of the invention is to replace the agitator with a jet for stirring inside the container. Thereby, the device can be made less bulky, less energy consuming and more gentle to formed flocks. The device and the method for achieving the object above are defined in the appended claims and discussed below.

A device for flocculation of a medium according to the present invention comprises a container inside which mixing of the medium with a flocculation agent is carried out, an inlet pipe for conveying the medium into the container and an outlet pipe for conveying the flocculated medium out of the container. The device is **characterized in that** a first part of the inlet pipe extends inside the container such that a jet output from the inlet pipe creates a motion of the medium and the flocculation agent that causes mixing of them.

In the rest of this text, by the term "content" is meant any mixture of medium and flocculation agent, containing flocks or not, inside the container or elsewhere. Thus, "content" as used herein, does not include the gas mixture present above the surface of the medium-flocculation agent mixture in the container. Thus, the mixture of medium and flocculation agent entering the container may, just as well as the flocculated medium leaving the container, be referred to as content.

Since the first part of the inlet pipe extends inside the container it is possible to direct a jet output from the inlet pipe in a desired way such as to create a desired motion of the content inside the container. Thereby, the medium can be mixed with the flocculation agent as desired to obtain large, stable flocks. Thus, the mixing of the medium and the flocculation agent is achieved by means of the kinetic energy of the medium when this is fed into the container. No further means for mixing is required which is beneficial from an energy consumption point of view. Since there is no physical element present inside the container for performing the mixing, the risk of destroyed flocks is minimized. Also, no mechanical elements that are worn out and may malfunction are involved in the mixing, as may be the case with conventional agitators, which enables a more inexpensive and reliable device.

The type of motion of the content generated by the jet depends inter alia upon the strength and direction of the jet. For example, a vortex or whirl or swirl may be generated which facilitates a proper mixing of the medium and the flocculation agent.

The device may be such that an inside of the container defines a circular cylinder. By that is meant that at least a part of the inside of the container defines a circular cylinder, not necessarily the complete inside. Such a cylindrical container inside with a rounded cross section promotes the formation of a vortex inside the container.

The device may be so constructed that a longitudinal axis of the inlet pipe, where the inlet pipe enters the container, extends in a radial direction of the container. Thereby, positioning of the inlet pipe centrally in relation to the container is facilitated. In turn, this enables a universal device in that one and the same device can be used irrespective of the surroundings. Further, this enables a less bulky device. If the inlet pipe instead was arranged non-centrally in relation to the container, it could be necessary to provide both a left hand orientated and a right hand orientated device to enable adaptation to specific conditions. Further, such a non-centrally arranged inlet pipe could make the device more bulky since a connection of the inlet pipe to some external apparatus could interfere more with the surroundings.

Further, the device may be so constructed that the jet is directed non-diametrically in relation to the longitudinal axis of the inlet pipe where the inlet pipe enters the container. This construction facilitates the formation of a rotational motion of the content inside the container.

The first part of the inlet pipe of the device may be bent in a horizontal plane. Such a design enables, in a rigid and straightforward way, central arrangement of the inlet pipe in relation to the container even with the jet directed non-diametrically in relation to the longitudinal axis of the inlet pipe where the inlet pipe enters the container.

The first part of the inlet pipe of the device may have an essentially constant cross section along a length direction of the inlet pipe. In other words, the portion of the inlet pipe extending inside the container may be uniform along the longitudinal axis of the inlet pipe. This is beneficial since it enables a relatively gentle and predictable handling of the medium fed through the inlet pipe to the container.

The device may further comprise means for adding the flocculation agent to the medium and these means may be provided on a second part of the inlet pipe arranged outside the container. If so, the flocculation process is initiated already outside the container, more particularly in the second part of the inlet pipe. Then, gentle handling of the content fed through the inlet pipe is particularly beneficial since it reduces the risk of destroying already formed flocks.

The inlet and outlet pipes connect to the container at a first and a second level, respectively. The first level may be higher than the second level. This relative height arrangement between the inlet and outlet pipe connection is beneficial since it promotes self-cleaning of the container. The flocks formed inside the container are heavy and tend to sink to the bottom of the container. Having the outlet pipe connection at a lower level than the inlet pipe connection makes it easier for the flocks to exit the container since they spontaneously fall in a direction from the inlet pipe connection to the outlet pipe connection. With the opposite arrangement of the inlet and outlet pipe connections, there may be a risk of flocks being trapped at the bottom of the container.

The device may be arranged to be connected to an inlet opening of a dewatering unit via the outlet pipe, directly or in-directly, which inlet opening is arranged at a third level. This set-up is suitable in connection with waste water treatment and enables concentration of the solids of the content, in other words, removal of water from the content, as a further step in the waste water treatment process. Further, in connection with this set-up, the third level at which the inlet opening of the dewatering unit is arranged may be higher than the first level at which the inlet pipe of the device is arranged. This is beneficial since it enables, in accordance with the principle of communicating vessels, a level of content inside the container above the inlet pipe which means that the inlet pipe discharges in, not above, the content. In turn this is advantageous since it facilitates the creation of the desired motion of the content inside the container.

The device can be arranged for flocculation of a medium in the form of sludge by means of a flocculation agent in the form of a polymer. The sludge may, as described by way of introduction, be generated in connection with waste water treatment.

A method in connection with flocculation of a medium according to the present invention comprises conveying the medium through an inlet pipe, which is connected to a container, to the container and adding a flocculation agent to the medium. It further comprises mixing the medium and the flocculation agent inside the container and conveying the flocculated medium out of the container through an outlet pipe. The method is characterized in providing a first part of the inlet pipe inside the container and outputting a jet from the inlet pipe to create a motion of the medium and the flocculation agent that causes mixing of them.

### BRIEF DESCRIPTION OF THE DRAWINGS

The invention will now be described in more detail with reference to the appended schematic drawings, in which
Fig. 1 is a schematic side view of a device according to a first embodiment of the present invention,
Fig. 2 is a schematic cross sectional view of a part of the device according to Fig. 1, and
Fig 3. is a schematic cross sectional view corresponding to Fig. 2 and illustrating a device according to a second embodiment of the present invention.

### DETAILED DESCRIPTION

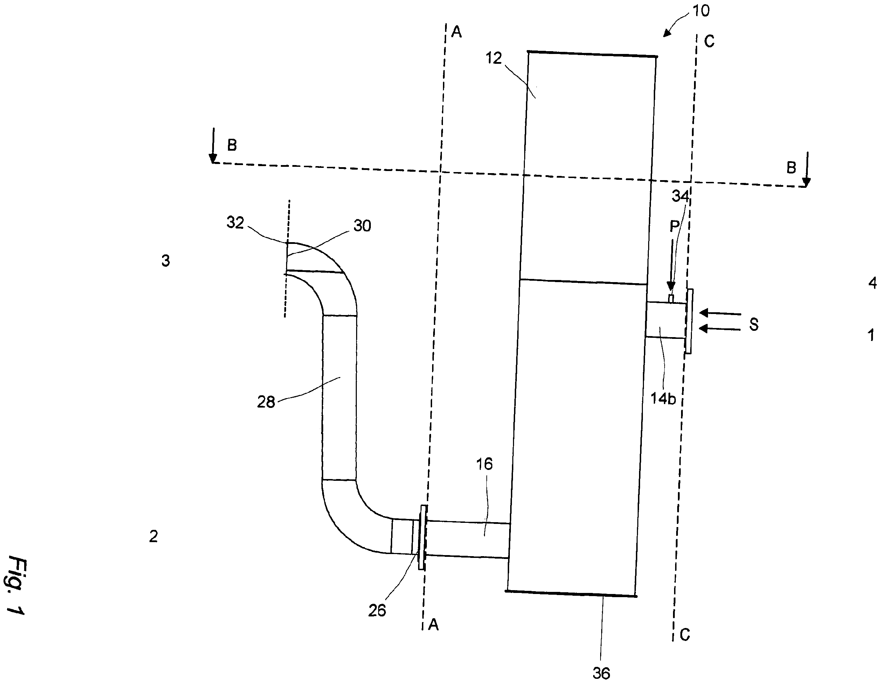

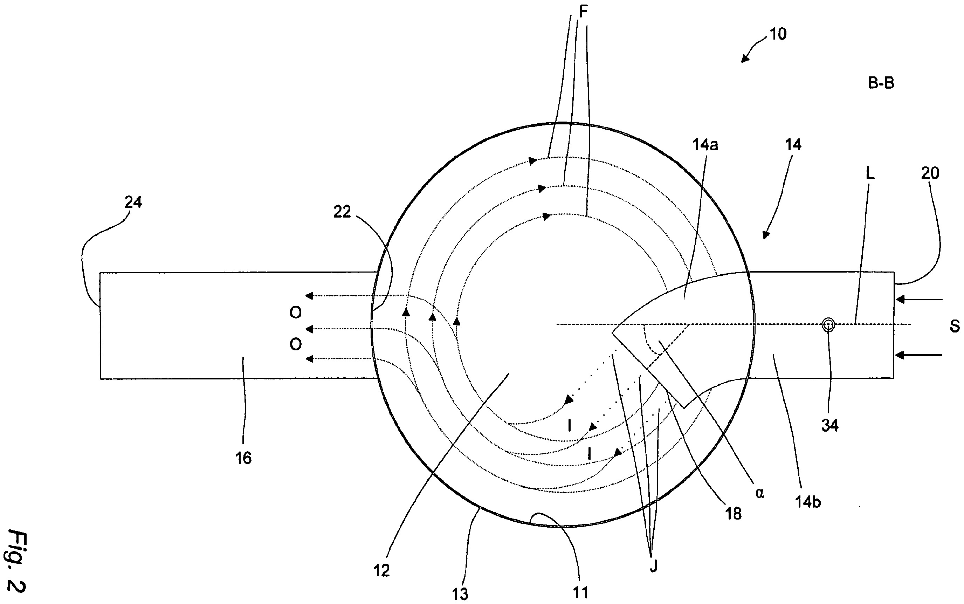

In Fig. 1 a device 10 for flocculation of a medium is illustrated. Fig. 2 contains a cross section of the part of the device 10 arranged between the vertical broken lines A-A & C-C in Fig. 1. The cross section in Fig. 2 is taken along the horizontal broken line B-B in Fig. 1. The medium to be flocculated by means of the device 10 is sludge S produced in connection with waste water treatment as mentioned by way of introduction. As also initially mentioned, sludge typically consists of suspended organic and inorganic solids as well as dissolved solids in a large amount of water. The flocculation is a process where the sludge S is mixed with a flocculation agent for making the solids of the sludge form lumps so as to facilitate a subsequent process where the solids are to be separated from the water.

The device 10 comprises a container 12 in the form of a hollow cylinder, a horizontal inlet pipe 14 and a horizontal outlet pipe 16, all made of stainless steel. The inlet pipe 14 is bent in the horizontal plane so as to comprise a first curved or bent part 14a, including a first end 18 of the inlet pipe 14 and extending inside the container 12, and a second straight part 14b, including a second end 20 of the inlet pipe 14 and extending outside the container. The second end 20 of the inlet pipe 14 is connected to a sludge supply unit (not illustrated) feeding sludge S into the inlet pipe as indicated by the arrows in the figures. Further, the inlet pipe 14 enters the container 12 at a first level 1. The outlet pipe 16 is at a first end 22 connected to the container 12 at a second level 2 and at a second end 24 connected to a first end 26 of a piping 28. A second end 30 of the piping 28 is at a third level 3 connected to an inlet opening 32 (schematically illustrated with ghost lines) of a dewatering unit (not further illustrated). The first, second and third levels 1-3 each relate to a position of an under side of the inlet pipe 14, the outlet pipe 16 and the piping 28, respectively.

The container has an inside 11, an outside 13 and, as is obvious from Fig. 2, a circular cross section. In other words, the container 12 has the shape of a circular cylinder. Further, both the second part 14b of the inlet pipe 14 and the outlet pipe 16 extend in a radial direction of the container 12. More particularly, the second part of the inlet pipe 14b and the outlet pipe 16 are arranged diametrically on opposite sides of the container 12 and centrally in relation to the same.

The device 10 further comprises means in the form of a supply pipe 34 for adding the flocculation agent (from a flocculation agent supply unit not illustrated, which supply unit is connectable to the supply pipe) to the sludge S. Here, a flocculation agent in the form of a polymer P is used which is conventional and suitable in connection with flocculation of a medium in the form of sludge. The supply pipe 34 is arranged on the second part 14b of the inlet pipe 14 for addition of the polymer P to the sludge S shortly before it enters the container 12 as indicated by the arrow in Fig. 1

Thus, sludge S is fed by the sludge supply unit through the inlet pipe 14 to the container 12 and the polymer P is added through the supply pipe 34 and fed with the sludge through the inlet pipe 14 to the container 12. Inside the container 12 the sludge S is gently but effectively mixed with the polymer P whereby the solids of the sludge stick to the polymer molecules and flocks are formed. Since the sludge is mixed with the polymer already in the inlet pipe, some flocculation takes place already inside the inlet pipe 14. However, most of the flocculation takes place inside the container 12.

During normal, steady state operation of the device 10, the content inside the container, i.e. the mixture of sludge and polymer, is maintained at a fourth level 4, which will be further discussed herein below. During such steady state device operation, a flow I into the container is the same as a flow O out of the container. The fourth level 4 is so much higher than the first level 1 that, as is obvious from Fig. 1, the first part 14a of the inlet pipe 14 is completely surrounded by, or immersed in, container content. Thus, since the first end 18 of the inlet pipe 14 discharges below the surface of the container content, a jet J of sludge from the inlet pipe is ejected completely into the content. Thereby, the kinetic energy of the jet J is supplied to the content inside the container whereby a motion is created therein. Since the first part 14a of the inlet pipe 14 is bent, the jet J of sludge is directed non-diametrically inside the container. More particularly, the jet is directed in an angle α in relation to a longitudinal axis L of the second part 14b of the inlet pipe 14. Thereby, a creation of a downwards directed rotational or spiral motion, such as a whirl or vortex, in the content inside the container, is promoted, as illustrated by the dotted flow lines F in Fig. 2. This rotational motion causes an effective mixing of the sludge and the polymer inside the container whereby an effective flocculation, with the formation of large, strong flocks, is enabled.

Thus, after being fed into the container through the inlet pipe 14, the sludge and the polymer whirl around, mix and form flocks, inside the container. Eventually, the sludge and polymer level with the outlet pipe 16 and can escape through the same from the container 12. Naturally, since flocks have been formed from the sludge and the polymer during the journey through the container, the content exiting the container is different from the content entering the container. More particularly, the content entering the container is mainly sludge and polymer but also some flocks, while the content leaving the container is flocculated sludge, i.e. mainly flocks and less concentrated sludge, in other words sludge containing more water and less solids.

To achieve sufficient flocculation, the solids of the sludge must be given enough time for bonding to the polymer molecules. Consequently, the sludge and the polymer should reside inside the container for a predetermined time which is dependent upon the specific situation and the actual conditions, such as subsequent treatment steps, before being fed out of the container 12 through the outlet pipe 16. By regulating the forth level 4, that is the level of content inside the container 12, the residence time for the content inside the container can be adjusted to fit the specific application.

When the flocks and the less concentrated sludge leave the container 12, they are fed through the outlet pipe 16 and further through the piping 28 up to the fourth level 4, i.e. the level of content inside the container 12, in accordance with the principle of communicating vessels. The fourth level 4 is above the level of the inlet opening 32 of the dewatering unit, i.e. the third level 3, as is apparent from Fig. 1. Consequently, the mixture of flocks and less concentrated sludge will spontaneously be fed through the inlet opening 32 into the dewatering unit for further treatment. Such further treatment may for example involve straining of the mixture to separate the solids from the water, but this will not be further described herein.

The inlet pipe 14 and the outlet pipe 16 of the device 10, the inlet opening 32 of the dewatering unit and the content inside the container 12 are, in the above described embodiment, arranged at the first level 1, the second level 2, the third level 3 and the fourth level 4, respectively. Further, as apparent from Fig. 1, level 4 > level 3 > level 1 > level 2 and some advantages with these relationships have already been discussed. It is worth noticing that the outlet pipe 16 is positioned below the inlet pipe 14. This arrangement of the inlet and outlet pipes makes the device 10 self-cleaning. The solids, lumped into flocks or not, are relatively heavy and spontaneously strive towards a bottom 36 of the container 12, i.e. in a direction from the inlet pipe to the outlet pipe. If the outlet pipe instead had been arranged at the same level as, or above, the inlet pipe, there would be a risk of solids depositing at the bottom of the container.

It is also worth mentioning that since the fourth level 4 is higher than the first level 1, use of the jet of sludge output from the inlet pipe for creating a motion in the content for mixing the same is facilitated. If the first level 1 instead was higher than the fourth level 4, the first part of the inlet pipe would discharge above the surface of the content inside the container and it would be harder, if even possible, to use the jet of sludge output from the inlet pipe to create the motion required for proper mixing of the content inside the container.

The inlet pipe 14, the outlet pipe 16 and the piping 28 all have circular cross sections in a direction perpendicular to a longitudinal axis (L for the second part 14b of inlet pipe 14) of the respective pipe/piping. Further, the inlet and outlet pipes 14 and 16 and the piping 28 have essentially constant cross sections in a direction perpendicular to the respective longitudinal axis. This is advantageous since it enables a relatively gentle treatment of the flocks. A varying pipe/piping cross section in a direction perpendicular to the longitudinal axis is associated with a tougher treatment of flocks being conveyed through the pipe. If the flocks are too aggressively handled, there is a risk of them breaking. Further, in respect of the inlet pipe 14, a constant cross section in a direction perpendicular to the longitudinal axis results in a jet with predictable characteristics that produces an effective but still gentle mixing of the content inside the container.

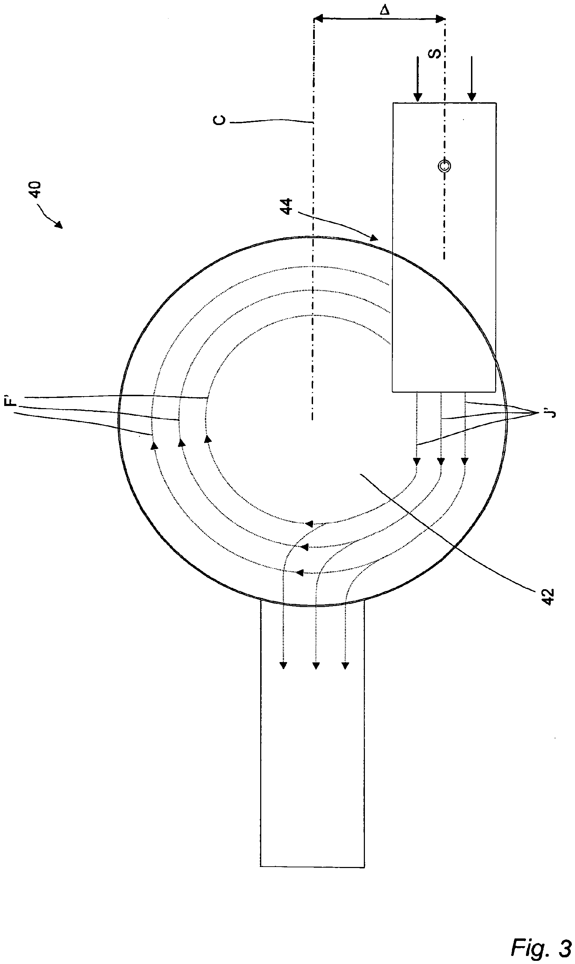

In Fig. 3 an alternative device 40 for flocculation of a medium in the form of sludge S is illustrated in cross-section. The device 40 is very similar to the device 10 illustrated in Figs. 1 & 2 and functions and features that are the same for these two devices will not be described again.

The parts differing between the device 10 and the device 40 are the inlet pipe, denoted 44 in Fig. 3 and the insertion of the inlet pipe into the container denoted 42 in Fig. 3. The inlet pipe 44 is not bent but straight all the way. Further, the inlet pipe 44 is not arranged in the radial direction of the container 42 or centrally in relation to the same. Instead, entrance of the inlet pipe 44 into the container 42 is displaced a distance Δ from a radial center line C of the container 42. Because of this displacement, a jet J' of sludge ejected from the inlet pipe 44 is directed non-diametrically inside the container 42. Thereby, a creation of a downwards directed rotational or spiral motion, such as a whirl or vortex, in the content inside the container, is created, as illustrated by the dotted flow lines F' in Fig. 3. This rotational motion causes an effective mixing of the sludge and the polymer inside the container whereby an effective flocculation, with the formation of large, strong flocks, is enabled.

The above described devices for flocculation of a medium use the kinetic energy of the medium fed into the container for mixing the medium with a flocculation agent. By a clever design and/or positioning, in relation to the container, of the inlet pipe, a rotational motion can be created inside the container that effectively but still gently mixes the medium with the flocculation agent such that large, strong flocks are formed. No physical mechanically complex and energy consuming agitator is necessary which makes the device less costly, more reliable, more space efficient and more effective since the risk of destroying the flocks is greatly reduced. Further, by arranging the parts of the device in a clever way in relation to each other, such as on different predetermined levels, the devices gain even more advantages as compared to prior art devices within this area.

The above described embodiments of the present invention should only be seen as examples. A person skilled in the art realizes that the embodiments discussed can be varied and combined in a number of ways without deviating from the inventive conception.

For example, in connection with the above described device 10, the second part 14b of the inlet pipe 14 and the outlet pipe 16 are arranged diametrically on opposite sides of the container 12. Naturally, they could also be arranged non-diametrically in relation it each other. Further, in both of the above described embodiments the outlet pipe extends in the radial direction of the container. Of course, there are many other possible arrangements for the outlet pipe. As an example, the outlet pipe can be arranged non-centrally with respect to the container just like the inlet pipe 44 of the above described device 40.

Further, the inlet and outlet pipes described above have straight portions, and are arranged horizontally and at certain levels. Of course, numerous variations are here possible. As an example the pipes can be tilted or arranged differently in relation to both each other and the rest of the device. Similarly, the pipes and pipings of the above described embodiments all have circular cross sections. Naturally, other cross section forms and combinations of such are possible.

In accordance with the above described devices, the inlet pipe is so positioned that the content inside the container is maintained at a level above the inlet pipe such that the inlet pipe completely discharges directly into the content of the container. This arrangement is beneficial since it facilitates creation of the desired motion inside the container. However, it would be possible to position the inlet pipe higher such that it only partly discharges directly into the content of the container.

The above described devices comprise containers formed as circular cylinders. Other container designs are naturally possible. As an example, the container could instead have an oval cross section. However, it is advantage if the inside of the container has a round form since this facilitates the creation of a spiral motion of the content inside the container.

Finally, the supply pipe 34 for addition of the polymer to the sludge need not be positioned on the second part of the inlet pipe. As an example, it could instead be positioned in or on the container or on the first part of the inlet pipe.

It should be stressed that a description of details not relevant to the present invention has been omitted and that the figures are just schematic and not drawn according to scale.

## Claims

1. A device (10, 40) for flocculation of a medium comprising a container (12) inside which mixing of the medium with a flocculation agent is carried out, an inlet pipe (14) for conveying the medium into the container and an outlet pipe (16) for conveying the flocculated medium out of the container, **characterized in that** a first part (14a) of the inlet pipe (14) extends inside the container, a jet (J) output from the inlet pipe creating a motion of the medium and the flocculation agent that causes the mixing of them.

2. A device (10, 40) according to claim 1, wherein an inside (11) of the container (12) defines a circular cylinder.

3. A device (10) according to claim 2, wherein a longitudinal axis (L) of the inlet pipe (14), where it enters the container (12), extends in a radial direction of the container (12).

4. A device (10) according to claim 3, wherein the jet (J) is directed non-diametrically in relation to the longitudinal axis (L) of the inlet pipe (14) where it enters the container (12).

5. A device (10) according to any of the preceding claims, wherein the first part (14a) of the inlet pipe (14) is bent in a horizontal plane.

6. A device (10, 40) according any of the preceding claims, wherein the first part (14a) of the inlet pipe (14) has an essential constant cross section along a length direction of the inlet pipe.

7. A device (10, 40) according to any of the preceding claims, further comprising means for adding the flocculation agent to the medium, said means being provided on a second part (14b) of the inlet pipe (14) arranged outside the container (12).

8. A device (10, 40) according to any of the preceding claims, wherein the inlet and outlet pipes (14, 16) connect to the container (12) at a first and a second level (1, 2), respectively, the fist level being higher than the second level.

9. A device (10, 40) according to claim 8, arranged to be connected to an inlet opening (32) of a dewatering unit via the outlet pipe (16), said inlet opening being arranged at a third level (3).

10. A device (10, 40) according to claim 9, wherein the third level (3) is higher than the first level (1).

11. A device (10, 40) according to any of the preceding claims, arranged for flocculation of a medium in the form of sludge (S) by means of a flocculation agent in the form of a polymer (P).

12. A method in connection with flocculation of a medium comprising conveying the medium through an inlet pipe (14), which is connected to a container (12), to the container, adding a flocculation agent to the medium, mixing the medium and the flocculation agent inside the container and conveying the flocculated medium out of the container through an outlet pipe (16), **characterized in** providing a first part (14a) of the inlet pipe inside the container and outputting a jet (J) from the inlet pipe to create a motion of the medium and the flocculation agent that causes the mixing of them.

13. A method according to claim 12, wherein an inside (11) of the container (12) defines a circular cylinder, comprising directing the jet (J) non-diametrically in relation to a longitudinal axis (L) of the inlet pipe (14) where it enters the container (12).

14. A method according to any of claims 12-13, comprising adding the flocculation agent to the medium before it enters the container (12).

15. A method according to any one of claims 12-14, comprising connecting the outlet pipe (16) to an inlet opening (32) of a dewatering unit.
